# EUROPÄISCHE PATENTSCHRIFT

(11) **EP 3 293 159 B1**
(45) Veröffentlichungstag und Bekanntmachung des Hinweises auf die Patenterteilung: **15.05.2019**
(21) Anmeldenummer: 17181584.8
(22) Anmeldetag: 17.07.2017
(51) Int. Cl.: C04B 2/10, C04B 7/44

(54) **VERFAHREN ZUM BRENNEN VON KALK ODER ZEMENT MIT SYNTHESEGAS**
METHOD FOR FIRING OF LIME OR CEMENT WITH SYNTHESIS GAS
PROCÉDÉ DE COMBUSTION DE CHAUX OU DE CIMENT AU MOYEN DE GAZ DE SYNTHÈSE

(30) Priorität: 09.09.2016 AT 508022016
(43) Veröffentlichungstag der Anmeldung: 14.03.2018
(73) Patentinhaber: Baumit Beteiligungen GmbH, 2754 Waldegg (AT)
(72) Erfinder: Tisch, Manfred, 2732 Würflach (AT); Reil, Eberhard, 2384 Breitenfurt (AT)
(74) Vertreter: Müllner, Martin

(56) Entgegenhaltungen:
- WO-A1-2012/122622
- WO-A1-2014/072583
- AT-A4- 505 927
- WEIL S ET AL: "Hydrogen energy from coupled waste gasification and cement production-a thermochemical concept study", INTERNATIONAL JOURNAL OF HYDROGEN ENERGY, ELSEVIER SCIENCE PUBLISHERS B.V., BARKING, GB, Bd. 31, Nr. 12, 1. September 2006 (2006-09-01), Seiten 1674-1689, XP024899925, ISSN: 0360-3199, DOI: 10.1016/J.IJHYDENE.2005.12.015 [gefunden am 2006-09-01]

## Beschreibung

### Technisches Gebiet

Die vorliegende Erfindung betrifft ein Verfahren zum Brennen von Kalk oder Zement, bei dem Synthesegas erzeugt und gegebenenfalls zusammen mit fossilen Brennstoffen zum Brennen des Kalks oder Zements verwendet wird.

### Stand der Technik

Zum Betrieb von Kalköfen und Zementdrehrohröfen werden vermehrt Sekundärbrennstoffe eingesetzt. Allerdings setzt dies voraus, dass diese Brennstoffe gut aufbereitet werden. Außerdem ist ein unterer Grenzwert des Heizwertes in Verbindung mit dem Wassergehalt entscheidend, ob das Verfahren betrieben werden kann. Unter einem unteren Heizwert werden feste Brennstoffe nicht mehr verbrannt, sondern gehen in eine unvollständige Verbrennung über, der Prozess kann nicht weiter betrieben werden.

Es wurde daher auch schon vorgeschlagen, aus Sekundärbrennstoffen ein heizwertreiches Gas zu erzeugen. Gase können auch dann, wenn sie einen geringen Heizwert haben, besser verbrannt werden als feste Brennstoffe.

Es gibt die sogenannte Vergasertechnologie im Betrieb mit Biomasse. Meist werden diese Anlagen mit Holzhackgut betrieben.

Allerdings gibt es kaum Versuche, Sekundärstoffe (Abfälle) zu Synthesegas zu verarbeiten, und noch weniger Versuche, das Synthesegas in Kalkbrennöfen oder Zementbrennöfen zu verwerten. Weiters werden Kalkbrennöfen zwar mit Schwachgas/Synthesegas betrieben, allerdings werden solche Gase als Nebenstoffströme aus z.B. der Stahlindustrie bezogen.

Die WO2014/072583 offenbart ein Verfahren zur Vergasung von beispielsweise Biomasse mit Sauerstoffhaltigem Gas, das erhältliche Produktgas beinhaltend neben Wasserstoff, Kohlenmono- und dioxid auch geringe Mengen an Methan. Das Dokument offenbart weiter, dass das erhältliche Produktgas bei der Verbrennung in Zement- oder Kalköfen eingesetzt werden kann.

### Kurzbeschreibung der Erfindung

Im Rahmen der vorliegenden Erfindung wurde gefunden, dass es bei Kalk- und Zementbrennstoffen von Vorteil ist, wenn im Synthesegas der Anteil von Methan mehr als 12 Vol-%, vorzugsweise mehr als 14 Vol-%, beträgt und das Volumenverhältnis von Methan zu Kohlenmonoxid zumindest 6:10, vorzugsweise zumindest 8:10, beträgt.

Im Vergleich zu den üblichen Vergasern, die mit Holzhackgut betrieben werden, ist der Anteil von Kohlenmonoxid und auch der Anteil von Wasserstoff zugunsten eines größeren Methananteils reduziert, sodass letztlich nicht nur das Verhältnis Methan:Kohlenmonoxid, sondern auch das Verhältnis Methan:Wasserstoff vergrößert wird.

Methan hat - bezogen auf das Volumen - einen höheren Heizwert als Wasserstoff, sodass der Heizwert insgesamt höher ist. Bei einem konkreten Versuch ergab sich ein Heizwert von 16,3 MJ/Nm³, wogegen bei den üblichen Vergasern der Heizwert bei 12 MJ/Nm³ liegt. Der Vorteil an höherem Methananteil liegt einerseits darin, dass weniger CO vorhanden ist, und andererseits darin, dass bei einem höheren Anteil an H ₂ das Gas im Brenner nur unter zusätzlichen Sicherheitsvorkehrungen einsetzbar ist. H₂ hat eine höhere Zündgeschwindigkeit und benötigt daher besondere Vorkehrungen gegen Flammrückschläge in den Zufuhrleitungen. Auch die höhere Energiedichte pro m³ Gaseintrag hat bei der Ausführung mit mehreren Brennern (Stand der Technik bei Kalköfen) aufgrund der geringeren Dimensionierung der Rohrleitungen Vorteile.

Von besonderem Vorteil ist es, dass solch ein Synthesegas mit weniger hochwertigen Brennstoffen erzeugt werden kann. Als Brennstoff können Rejecte und/oder Zöpfe aus der Papierindustrie oder heizwertreiche Fraktionen aus der Aufbereitung von Siedlungs- und Gewerbeabfällen eingesetzt werden.

Das Problem bei Sekundärbrennstoffen liegt in den Verunreinigungen, die sich - eventuell chemisch verändert - in den Abgasen der Brennöfen wiederfinden und bei Überschreitung vorgegebener Grenzwerte deren Betrieb verbieten bzw. aufwändige Reinigungsstufen erforderlich machen, welche die durch die Verwendung der Sekundärrohstoffe erzielte Einsparung zunichtemachen. Insbesondere Stickstoff-Verbindungen im Brennstoff sind problematisch, da der Stickstoff-Anteil im Brennstoff während der Vergasung nahezu vollständig in NH₃ umgewandelt wird, welches im anschließenden Verbrennungsprozess zu nicht erwünschten Stickoxiden oxidiert.

Um dieses Problem zu beseitigen wird nach einem bevorzugten Merkmal der Erfindung vorgeschlagen, dass man das bei der Vergasung entstehende NH₃ auswäscht und zur Entfernung der beim Brennen des Kalks oder Zements entstehenden Stickoxide verwendet.

Durch das Auswaschen des NH₃-Anteiles im Produktgas mit Wasser (Absorption) oder Wasser/Schwefelsäuregemisch (Chemisorption), kann eine Reinigungseffizienz größer 80% erreicht werden.

Der entstehende Ammoniak braucht nicht entsorgt zu werden, sondern kann zur Rauchgaswäsche nach dem Brennen verwendet werden. Die Stickoxide reagieren mit dem Ammoniak zu Stickstoff und Wasser, sodass im Idealfall keinerlei schädliche Substanzen entsorgt werden müssen und auch keine teuren Katalysatoren angeschafft werden müssen zur Beseitigung der Stickoxide.

Da die Reaktion der Stickoxide mit Ammoniak bei niedrigen Konzentrationen von Ammoniak wenig effizient ist, ist nach einer bevorzugten Ausführungsform der Erfindung vorgesehen, dass die zum Auswaschen des NH₃ verwendete Flüssigkeit, vorzugsweise Wasser, im Kreislauf geführt wird, bis eine vorgegebene NH₃-Konzentration erreicht wird.

Wird das Absorbens im Kreislauf gefahren, kann eine Anreicherung des Absorbats auf 6-10% erreicht werden und letztlich in den bestehenden Prozessen zur Kalzinierung als Entstickungsmittel (SCR- oder SNCR-Verfahren) effizient eingesetzt werden.

Ein weiteres Problem sind Chlorverbindungen, denn aus diesen wird beim Vergasen HCl gebildet, welches in der Folge mit Wasser Salzsäure bildet und somit umweltschädlich ist.

Um dieses Problem in den Griff zu bekommen ist nach einer weiteren Ausgestaltung der Erfindung vorgesehen, dass das Synthesegas mittels eines kalksteinhaltigen Wirbelbetts erzeugt wird und dass das Wirbelbett danach dem Zementrohstoff zugefügt wird. Der Kalkstein im Wirbelbett reagiert mit Chlor zu Calciumchlorid und kann daher bei der Zementproduktion verwertet werden.

### Kurze Beschreibung der Zeichnungsfiguren

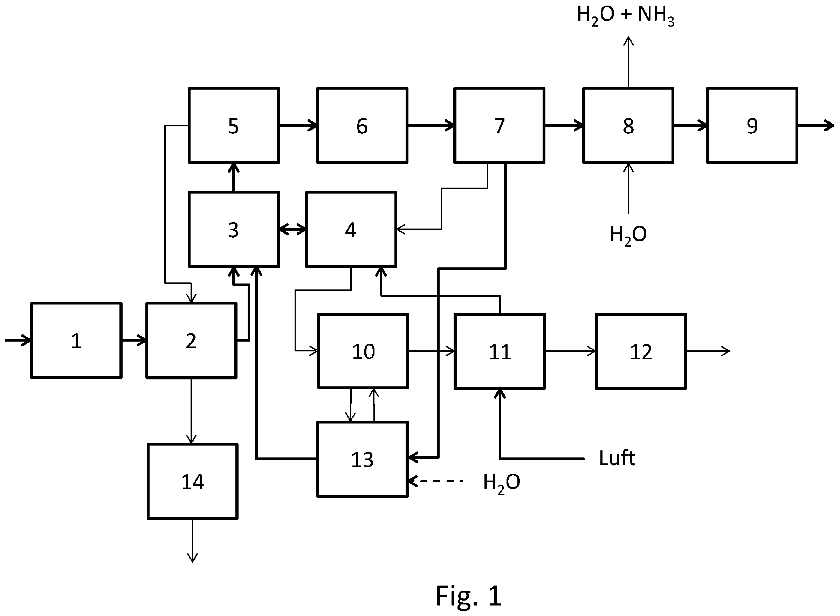

Anhand der beiliegenden Zeichnung wird die vorliegende Erfindung näher erläutert. Die einzige Figur zeigt schematisch ein Blockschaltbild einer Anlage, mit der das erfindungsgemäße Verfahren durchführbar ist.

### Beschreibung der Ausführungsarten

Das Material wird vor dem Einsatz in einer Zerkleinerungsvorrichtung 1 auf eine Eingangsgröße von kleiner 80 mm zerkleinert. Im Zuge der Zerkleinerung erfolgt eine Reduktion des Wassergehaltes von rund 5-10% (durch die Anwendung eines Querstromzerkleinerers). Im weiteren Verlauf wird das Material einem Trockner 2 zugeführt, welcher die Abwärme aus dem Vergasungsprozess nutzt. Konkret wird das Material auf 25% Wassergehalt getrocknet. Die Trocknung erfolgt bei Temperaturen von bis zu 110°C.

Kernpunkt der Anlage ist ein Zweibett-Wirbelschichtvergaser. Im Vergasungsteil 3 wird der getrocknete und zerkleinerte Ersatzbrennstoff aufgewirbelt und unter Sauerstoffmangel bei circa 850°C und unter Zuführung von Dampf in kürzester Zeit vergast. Das Bettmaterial (Olivinsand und Kalkstein) fungiert als Wärmeträger und sorgt für gleich bleibende Temperatur im Reaktor.

Zusätzlich zum Vergasungsteil 3 ist ein räumlich getrennter Verbrennungsteil 4 vorhanden, in dem die zum Vergasen notwendige Wärme erzeugt wird. Die Wärmeübertragung erfolgt durch eine Kreislaufführung des Bettmaterials. Als Brennstoff für den Verbrennungsteil 4 dient Pyrolysekoks, der sich im Vergasungsteil 3 an der Oberfläche des Bettmaterials absetzt und zusammen mit diesem in den Verbrennungsteil 4 gefördert wird. Zur Verbrennung wird dem Verbrennungsteil 4 Luft zugeführt. Der Vorteil des zweistufigen Verfahrens liegt darin, dass das Produktgas (CO, H₂, CH₄, CO₂) nicht durch den Stickstoff der Verbrennungsluft verdünnt wird, sodass also der Brennwert pro Volumeneinheit deutlich höher ist als bei einem einstufigen Verfahren. Das Abgas des Verbrennungsteils 4 besteht - abgesehen von Stickstoff und nicht verbrauchtem Sauerstoff der Verbrennungsluft - aus CO₂ und H₂ O.

Im nächsten Schritt wird das entstandene Produktgas in einem Wärmetauscher 5 gekühlt und gereinigt. Die bei der Kühlung abgegebene Wärme wird zur Trocknung des feucht angelieferten Ersatzbrennstoffs im Trockner 2 genutzt. Die Abluft des Trockners gelangt nach einer Abluftreinigung 14 ins Freie. Das Produktgas wird anschließend in einer Entstaubungsanlage 6 entstaubt, und nach der Kühlung kondensierende Teeranteile werden in einem Teerwäscher 7 mit Rapsmethyl-Esther (RME) ausgewaschen. Die anfallenden Verunreinigungen werden dem Verbrennungsteil 4 zugeführt bzw. das im Teerwäscher 7 anfallende kondensierte Wasser aus dem Produktgas über eine Phasentrennung einem Verdampfer 13 zugeführt. Das System benötigt daher im stationären Betrieb kein zusätzliches Speisewasser.

Das im Verbrennungsteil 4 bei der Verbrennung entstehende Abgas wird in einem Rauchgaskühler 10 abgekühlt, ein Teil der Abwärme wird über ein Wärmeverschiebungssystem dem Verdampfer 13 zur Erzeugung von Dampf, der dem Vergasungsteil 3 für den Wasser-Dampf-Prozess zugeführt wird, genutzt. Ein weiterer Teil der Abwärme wird einem Luftvorwärmer 11 zugeführt, der die vom Verbrennungsteil 4 benötigte Luft vorwärmt, danach erfolgt eine Reinigung in einer Abluftreinigung 12.

Der Stickstoffanteil im Brennstoff wird während der Vergasung nahezu vollständig in NH₃ umgewandelt, welches im anschließenden Verbrennungsprozess zu nicht erwünschten Stickoxiden oxidiert. Dies kann nur durch eine weitere Reinigungsstufe für das Produktgas, nämlich durch einen Ammoniakwäscher 8, verhindert werden. Durch das Auswaschen des NH₃-Anteiles im Produktgas mit Wasser (Absorption) oder Wasser/Schwefelsäuregemisch (Chemisorption) kann eine Reinigungseffizienz größer 80% erreicht werden. Wird das Absorbens im Kreislauf gefahren, kann eine Anreicherung des Absorbats auf 6-10% erreicht werden und letztlich in den bestehenden Prozessen zur Kalzinierung als Entstickungsmittel (SCR- oder SNCR-Verfahren) eingesetzt werden.

Das Produkt- oder Synthesegas muss für die weitere Anwendung in einem Verdichter 9 auf zumindest 1 bar Überdruck verdichtet werden.

Als Sekundärrohstoff werden eingesetzt:
- Heizwertreiche Fraktionen aus der Papierindustrie (Rejecte und Zöpfe)
- Heizwertreiche Fraktionen aus der Aufbereitung von Siedlungs- und Gewerbeabfällen (Qualitätsgesicherte Brennstoffe)

Die Vergasung von kohlenwasserstoffhaltigen Materialien stellt eine vielversprechende und nachhaltige Möglichkeit zur effizienten Erzeugung von Wärme und Energie, vor allem aber auch zur Produktion von Synthesegas (Produktgas) für die Industrie dar.

Ein Reject aus der Papierindustrie mit folgender Zusammensetzung wurde verwendet:

**Tabelle 1**

| **Element** | **In Massenprozent Trockensubstanz** |
|---|---|
| C | 58,5 |
| O | 24,6 |
| H | 6,5 |
| N | 0,7 |
| S | 0,1 |
| Cl | 0,6 |
| Aschegehalt | 8,7 |
| Hu in MJ/kg feucht | 17,247 |
| Wassergehalt in Gew% | 55% |

Dabei ergab sich ein Synthesegas mit folgender Zusammensetzung:
Wasserstoff 35 vol%
Kohlenmonoxid 14 vol%
Kohlendioxid 23 vol%
Methan 16 vol%
Stickstoff 3 vol%

Mit dieser Zusammensetzung ist ein Betrieb eines Kalkofens mit 100% Synthesegas möglich. Ein Zementwerk lässt die Einbringung des Synthesegases zur 100%igen Abdeckung des Energiebedarfs im Kalzinator zu. Für die Primärfeuerung eines Drehrohrs sind Ersatzraten von bis zu 80% möglich.

In diesem speziellen Verfahren werden alle entstehenden Reststoffe in den Prozess zurückgeführt. Bei der Gasreinigung entstehen weder Abfälle noch Abwässer, das Produktgas ist frei von Stickstoff bzw. Stickoxiden. Wirbelschicht-Dampf-Vergaser arbeiten außerordentlich zuverlässig und gleichmäßig (7.000-8.000 Betriebsstunden pro Jahr), weshalb auch eine zuverlässige Versorgung zugesichert werden kann.

Allgemein sollte die Zusammensetzung des Ausgangsmaterials in folgenden Bereichen liegen:

**Tabelle 2**

| **Element** | **Massenprozent Trockensubstanz** |
|---|---|
| C | 48-60 |
| O | 20-25 |
| H | 4-10 |
| N | 0,1-0,7 |
| S | 0,03 - 0,1 |
| Cl | 0,4-1,5 |
| Hu in MJ/kg | 17-28 |

Beim entstehenden Produktgas sollte das Verhältnis von H₂:CH₄ im Bereich von 1,8-3,0 liegen.

Durch den erhöhten Methananteil von über 12 Vol-% ist auch ein deutlich besserer Heizwert des Produktgases erreichbar. Die gezielte Auswahl des Einsatzbrennstoffes in seiner Zusammensetzung als auch in seiner Konsistenz erlaubt eine optimale Vergasungsreaktion mit keinen Koksrückständen und maximal nutzbarer Energiedichte. (Erhöhte Teeranteile würden zu höherer Energiedichte führen, erlauben jedoch keine Verdichtung des Gases. Eine Reinigung von Teeren, die jedoch wieder in der Brennkammer genutzt werden können, ist erforderlich.)

Des Weiteren bedarf es einer gezielten Zusammensetzung des Einsatzmaterials hinsichtlich N- und S-Anteilen. Bei erhöhten Werten muss eine zusätzliche Rauchgasreinigung installiert werden, sodass eine Verunreinigung des zu kalzinierenden Materials ausgeschlossen werden kann. Die Werte dürfen die oben angeführte Bandbreite nicht überschreiten.

Die erhöhte Varianz an einzusetzenden Brennstoffen (Rejecten, Zöpfen, qualitätsgesicherte Ersatzbrennstoffe, etc) erlaubt auch eine flexible Marktbearbeitung. Entscheidend sind die Elementarzusammensetzung sowie der Feuchtegehalt und die Geometrie des Brennstoffes.

Erst durch die Entwicklung des optimalen Feuchtegehaltes (20-25%, erreichbar durch eine Vortrocknung und Abwärmenutzung aus dem Prozess) und auch der Geometrie (2D-Struktur kleiner 80-100 mm) wird eine optimale Einsetzbarkeit der ausgewählten Materialien als Brennstoff in einem Wirbelschichtvergaser mit Dampf in Kombination mit einem Kalzinierungsprozess und Zementklinkerherstellung ermöglicht.

Das zusätzlich vermehrt eingetragene Chlor im Brennstoff führt im Zuge der Vergasung zur Bildung von Chlorwasserstoff. Dies wiederum verursacht Korrosionsschäden in der Anlage. Durch die optimale Zusammensetzung des Wirbelschichtbettes (Olivinsand und Kalkstein) soll die Einbindung von Chlor in das Bettmaterial ermöglicht werden. Im Idealfall wird Chlor als Kalziumchlorid ausgetragen und kann mit dem Olivin und gebranntem Restkalk z.B. im Zementwerk einer stofflichen Verwertung zugeführt werden.

Letztlich sind die optimale Produktgaszusammensetzung, ein geringer Anteil an Teeren, eine hohe Temperatur und optimaler Druck als wichtige Voraussetzungen für die Verwendung des Produktgases in einer Industrieanlage als optimaler fossiler Brennstoffersatz zu sehen. Das Produktgas wird diskontinuierlich vom Kunden (z.B. Kalkofen) abgenommen, wodurch eine Pufferung des Gases erforderlich ist. Der Anteil an biogenem Kohlenstoff liegt beim eingesetzten Material bei 45-55%, wodurch eine Einsparung an fossilem Kohlenstoff von bis zu 50% erreicht wird.

## Patentansprüche

1. Verfahren zum Brennen von Kalk oder Zement, bei dem Synthesegas erzeugt und gegebenenfalls zusammen mit fossilen Brennstoffen zum Brennen des Kalks oder Zements verwendet wird, **dadurch gekennzeichnet, dass** im Synthesegas der Anteil von Methan mehr als 12 Vol-%, vorzugsweise mehr als 14 Vol-%, beträgt und dass das Volumsverhältnis von Methan zu Kohlenmonoxid zumindest 6:10, vorzugsweise zumindest 8:10, beträgt.

2. Verfahren nach Anspruch 1, **dadurch gekennzeichnet, dass** als Brennstoff Rejecte und/oder Zöpfe aus der Papierindustrie eingesetzt werden.

3. Verfahren nach Anspruch 1, **dadurch gekennzeichnet, dass** als Brennstoff heizwertreiche Fraktionen aus der Aufbereitung von Siedlungs- und Gewerbeabfällen eingesetzt werden.

4. Verfahren nach einem der Ansprüche 1 bis 3, **dadurch gekennzeichnet, dass** man das bei der Vergasung entstehende NH₃ auswäscht und zur Entfernung der beim Brennen des Kalks oder Zements entstehenden Stickoxide verwendet.

5. Verfahren nach Anspruch 4, **dadurch gekennzeichnet, dass** die zum Auswaschen des NH₃ verwendete Flüssigkeit, vorzugsweise Wasser, im Kreislauf geführt wird, bis eine vorgegebene NH₃-Konzentration erreicht wird.

6. Verfahren nach einem der Ansprüche 1 bis 5, **dadurch gekennzeichnet, dass** das Synthesegas mittels eines kalksteinhaltigen Wirbelbetts erzeugt wird und dass das Wirbelbett danach dem Zementrohstoff zugefügt wird.

## Claims

1. A method for burning lime or cement, in which synthesis gas is produced and optionally used together with fossil fuels for burning the lime or cement, **characterized in that** the proportion of methane in the synthesis gas is more than 12 vol%, preferably more than 14 vol%, and **in that** the volume ratio of methane to carbon monoxide is at least 6:10, preferably at least 8:10.

2. The method according to claim 1, **characterized in that** rejects and/or pulper ropes from the paper industry are used as fuel.

3. The method according to Claim 1, **characterized in that** fractions rich in calorific value from the preparation of urban and industrial waste are employed as fuel.

4. The method according to one of Claims 1 to 3, **characterized in that** the NH₃ formed during the gasification is washed out and used to remove the nitrogen oxides formed during the burning of the lime or cement.

5. The method according to Claim 4, **characterized in that** the fluid used for washing out the NH₃, preferably water, is circulated until a predetermined NH₃ concentration is reached.

6. The method according to one of claims 1 to 5, **characterized in that** the synthesis gas is produced using a fluidized bed containing limestone and **in that** the fluidized bed is then added to the cement raw material.

## Revendications

1. Procédé de cuisson de chaux ou de ciment, lors duquel un gaz de synthèse est produit puis utilisé, éventuellement avec des combustibles fossiles, pour cuire ladite chaux ou ledit ciment, **caractérisé en ce que** ledit gaz de synthèse comporte une proportion de méthane supérieure à 12 % en volume, de préférence supérieure à 14 % en volume, et que le rapport volumique entre le méthane et le monoxyde de carbone est supérieur ou égal à 6 : 10, de préférence supérieur ou égal à 8 : 10.

2. Procédé selon la revendication, **caractérisé en ce que** l'on met en oeuvre, en tant que combustible, des refus de recyclage et/ou tresses de pulpage issus de l'industrie papetière.

3. Procédé selon la revendication 1, **caractérisé en ce que** l'on utilise, en tant que combustible, des fractions à haute valeur calorifique issues du traitement de déchets urbains ou industriels.

4. Procédé selon l'une des revendications 1 à 3, **caractérisé en ce que** l'on effectue un lavage visant à retenir le NH₃ produit lors de la gazéification et utiliser ce dernier pour éliminer les oxydes d'azote produits lors de la cuisson de ladite chaux ou dudit ciment.

5. Procédé selon la revendication 4, **caractérisé en ce que** le liquide utilisé lors du lavage visant à retenir le NH₃, s'agissant préférentiellement d'eau, est recyclé jusqu'à ce qu'une concentration prédéfinie en NH₃ soit atteinte.

6. Procédé selon l'une des revendications 1 à 5, **caractérisé en ce que** ledit gaz de synthèse est produit au moyen d'un lit fluidisé contenant du calcaire et que ledit lit fluidisé est ensuite ajouté à la matière première permettant d'obtenir du ciment.
